# EUROPEAN PATENT SPECIFICATION

(11) **EP 0 845 425 B1**
(45) Date of publication and mention of the grant of the patent: **11.06.2003**
(21) Application number: 97301992.0
(22) Date of filing: 24.03.1997
(51) Int. Cl.: B65G 17/08

(54) **Conveyor belt module and conveyor belt**
Förderbandmodul sowie Förderband
Module d'une bande transporteuse et bande transporteuse

(30) Priority: 29.11.1996 JP 31898296
(43) Date of publication of application: 03.06.1998
(73) Proprietor: Yamakyu Chain Kabushiki Kaisha, Tokyo 108 (JP)
(72) Inventor: Kato, Fukukazu c/o Yamakyu Chain K.K., Tokyo 108 (JP); Nakamura, Tsuyoshi c/o Yamakyu Chain K.K., Tokyo 108 (JP); Ohara, Keiji c/o Yamakyu Chain K.K., Tokyo 108 (JP)
(74) Representative: Gill, David Alan

(56) References cited:
- EP-A- 0 095 933
- EP-A- 0 175 483
- EP-A- 0 380 202
- EP-A- 0 459 691
- EP-A- 0 598 453
- EP-A- 0 637 557
- WO-A-95/05986
- US-A- 5 293 989

## Description

The present invention relates to a conveyor belt module and a conveyor belt.

In particular, the invention relates to a conveyor belt constructed of the plurality of types of the belt modules, wherein the plurality of types of belt modules are connected widthwise to form the conveyor belt which may vary in width of its conveying surface, depending upon the number and the types of the belt modules used therein. More particularly, the present invention relates to two types of the belt modules and a conveyor belt constructed of these two types of the belt modules.

It is well known to form a conveyor belt by connecting widthwise a plurality of types of belt modules which are generally made of plastic, wherein the conveyer belt may vary in width, depending on the number and the types of the belt modules used therein.

In case of a conventional conveyor belt such as described above, a belt module used in each of opposite sides of the conveyor belt serves as a side member of the conveyor belt, and must receive a plug which is engaged with a connecting rod for connecting adjacent belt modules with each other. Consequently, the belt modules used in the opposite side of the conveyor belt are different in type from those (i.e., intermediate belt modules) used in an intermediate portion of the conveyor belt. Namely, in the conventional conveyor belt, at least two different types of the belt modules are required. Consequently, when two types of the belt modules, which are different in width to form a first and a second belt module, are required in use, it is necessary to prepare at least four different types of the belt modules, two of which are for the first belt module to serve as a side member and an intermediate member of the conveyor belt constructed of the first belt module, and the remaining two are for the second belt module and serve as a side member and an intermediate member of the conveyor belt constructed of the second belt module.

On the other hand, when the conveyor belt is constructed of two types of belt modules one of which serves as a side member of the conveyor belt and the other serves as an intermediate member of the conveyor belt, adjacent side members of the conveyor belt are considerably separated widthwise from each other and have their rods exposed to the outside. These are disadvantages inherent in the conventional conveyor belt. Further, in the conventional conveyor belt, a plurality of belt modules are connected widthwise to form a wide conveyor belt, which imposes a heavy load on a power train of the conveyor belt, so that a powerful motor is required. Due to such heavy load, it is also necessary for the conventional conveyor belt to increase its rigidity and have each of their belt modules increased in thickness in construction.

As described above, it is necessary for the conventional wide conveyor belt to prepare a large number of its components, which increases tooling cost and stock control cost of the conveyor belt. Further, the assembling operations of the conventional conveyor belt take too much time and labour, which increases the manufacturing cost thereof.

EP-A-0,380,202 discloses a conveyor belt module according to the preamble of claim 1 having an elongate rib portion with a plurality of projections extending from opposite sides thereof in a staggered manner and which are arranged to be pivotably connected together through interleaving of the projections of adjacent modules so as to form a conveyor belt assembly.

The invention seeks to provide for a conveyor belt module, and a conveyor belt formed therefrom and having advantage over known such modules and belts.

The conveyor belt module according to claim 1 comprises a central rib extending transversely from one end to an opposite end, an equal and even number of projections extending perpendicularly from the rib on a front side and an opposite rear side, said projections each having an equal width and being staggered along the rib and all projections and interval spaces there between having substantially on equal width,
the central rib extending from a conveying surface down to a bottom surface of the conveyor belt module,
each projection being defined by a pair of vertical side walls extending perpendicularly to and integrally from the rib along the full height of the rib in parallel to each other and being joined at a closed end portion, said closed end portion being formed at the ends of the respective pair of side walls, each of said projections having a transverse through-hole for receiving a connecting rod there through for connecting conveyor belt modules arranged in adjacent rows and columns;
characterized in that:
a concave portion is provided in the lower surface portion of the rib and arranged for accepting a tooth of a sprocket therein, and in that the corresponding closed end portions are cylindrical in shape so as to form a through-hole for said connecting rod between the pair of side walls and for being brought into contact with the tooth of the sprocket when entered between the side walls of the projection and into the concave portion.

This enables the conveyor belt to endure great drive stress and enables the same driving sprocket to rotate in the forward and the reverse direction.

Advantageously, a conveyor belt assembly can be formed from employment of a plurality of conveyor belt modules as defined above.

The present invention is particularly advantageous in providing a plurality of types of conveyor belt modules (hereinafter simply referred to as the belt modules) and a conveyor belt constructed of the plurality of types of the belt modules, wherein the plurality of types of belt modules are connected widthwise to form the conveyor belt which may vary in width of its conveying surface, depending on the number and the types of the belt modules used, wherein the number of the types of the belt modules used in the present invention are only two which are combined as needs require, without exposing their connecting rods to drive gears of the conveyor belt, wherein the belt modules have their outer side end shapes so formed into ones capable of keeping their lateral clearances minimum when combined, wherein the conveyor belt has its side and bottom surfaces improved in wear resistance without increasing the thickness of plastic used therein, but by having its belt modules improved in shape in design.

In particular, the invention provides a conveyor belt module wherein:
each of the outmost projections, which are disposed in opposite outer side end portions of the belt module, has its conveying surface connected with the side wall portion of adjacent one of the projections disposed in the opposite side with respect to the rib portion, so as to minimize a clearance appearing in the connections in the conveying surface in the side end portion of the conveyor belt when a plurality of the belt modules are connected with each other, the projection being provided with a groove and the through-hole extending in a direction perpendicular to the groove, wherein the groove receives a plug in a manner such that the plug is completely embedded in the groove in the outer side end surface of the belt module, the plug retaining the connecting rod and being fixed in the through-hole;
the number of types of the belt modules are two, one of which is a first belt module with a basic width, and the other a second belt module with half the basic width of the first belt module, the number of the projections of the second belt module being half the number of the projections of the first belt module, wherein a plurality of the first and the second belt modules are connected widthwise with each other to form a conveyor belt with a desired width equal to an integer multiple of a width of the second belt module.

Further, the bottom surface of the belt module is formed into a curved, i.e., circular-arc surface extending from the rib portion to each of the opposite projections thereof. When the belt modules are assembled into the conveyor belt, the bottom surfaces of the belt modules of the conveyor belt are brought into area contact with a corner guide a radius of which is a predetermined value, which eliminates uneven wear to improve the bottom surfaces of the belt modules in wear resistance.

The invention is described further hereinafter, by way of example only, with reference to the accompanying drawings in which:
Fig. 1A is a plan view of the conveyor belt module of the present invention;
Fig. 1B is a side view of the conveyor belt module shown in Fig. 1A, looking in the direction of the arrow of Fig. 1A;
Fig. 1C is a bottom view of the conveyor belt module shown in Fig. 1A;
Fig. 1D is a side view of the conveyor belt module shown in Fig. 1A;
Fig. 2A is a plan view of the conveyor belt of the present invention, wherein a plurality of the chain belt modules shown in Fig. 1A are connected widthwise with each other to form the conveyor belt;
Fig. 2B is a side view of the conveyor belt shown in Fig. 2A, looking in the direction of the arrow of Fig. 2A;
Fig. 2C is a bottom view of the conveyor belt shown in Fig. 2A;
Fig. 2D is a side view of the conveyor belt shown in Fig. 2A; and
Fig. 3 is a perspective view of the plug for holding the connecting rod through which the conveyor belt modules are connected with each other to form the conveyor belt of the present invention.

Hereinbelow, an embodiment of a conveyor belt module (hereinafter simply referred to as the belt module) of the present invention and an embodiment of a conveyor belt constructed of a plurality of these belt modules, which are connected widthwise with each other to form the conveyor belt, will be described in detail with reference to the accompanying drawings.

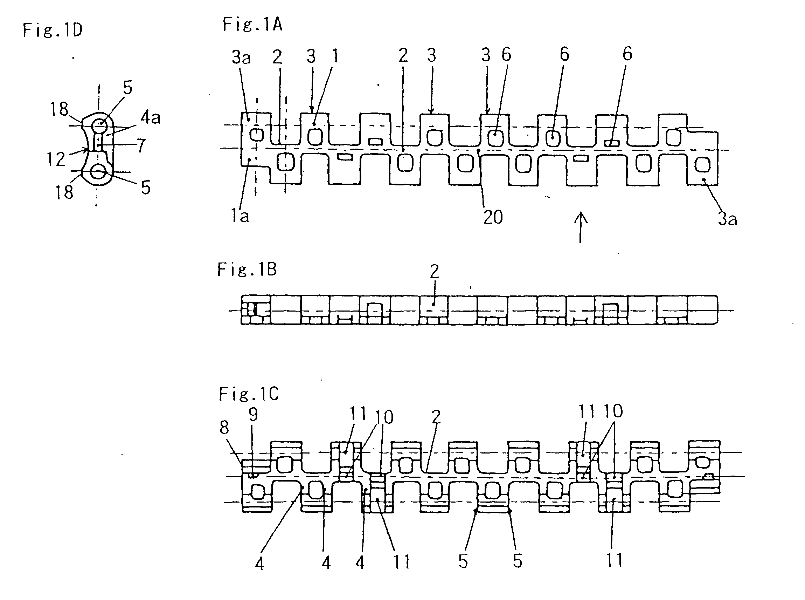

Figs. 1A, 1B and 1C show an embodiment of the belt module of the present invention. Of these drawings, Fig. 1A shows a conveying surface 1 of the belt module.

As viewed in Fig. 1A, the belt module of the present invention is rotationally symmetric about the center 20 of the conveying surface 1, which makes it possible for the belt modules to be connected with each other and to form a conveyor belt provided with a desired width.

The belt module of the present invention is provided with a central straight rib portion 2 from which the same even number of projections 3 each with a predetermined width extend in opposite directions perpendicular to a longitudinal axis of the rib portion 2. These projections 3 are spaced apart from each other at equal intervals while staggered along the rib portion 2, as shown in Fig. 1A.

The belt module of the present invention having the above construction is improved as follows.

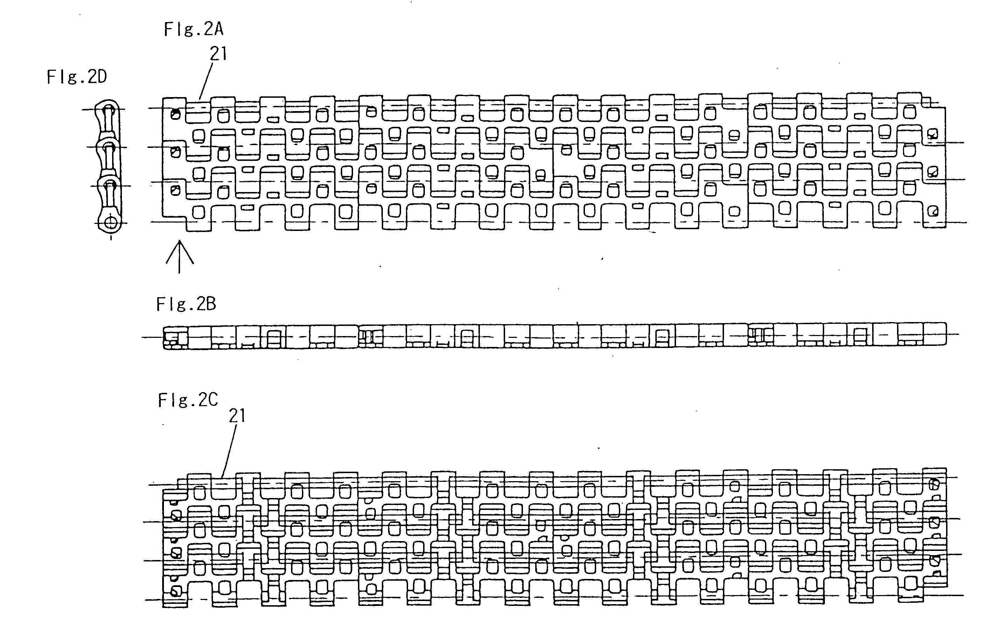

Each of a pair of side wall portions 4, which form the projection 3, is provided with a through-hole 5 for passing therethrough a connecting rod 21 (shown in Fig. 2A and 2B) extending in parallel to the longitudinal axis of the rib portion 2. Through such connecting rod 21 the belt modules of the present invention are connected with each other.

Although the conveying surface 1 is generally flat, it is also possible for the conveying surface 1 to assume any other shape depending upon its application. For example, the conveying surface 1 may be provided with at least one opening assuming a desired shape. Further, the conveying surface 1 may be provided with any desired accessory, for example such as rib-like or button-like members, pushing members, side-guide members, magnet plates, rubber segments and like accessories, depending upon articles to be conveyed thereon.

Of the projections 3, each of outmost ones 3a, which are disposed in opposite outer side end portions of the belt module, has its conveying surface 1a connected with the side wall portion 4 of adjacent one of the projections 3 disposed in the opposite side with respect to the rib portion 2, so as to minimize a clearance appearing in the connections in the conveying surface 1a in the side end portion of the conveyor belt when a plurality of the belt modules are connected with each other, as shown in Fig. 2A.

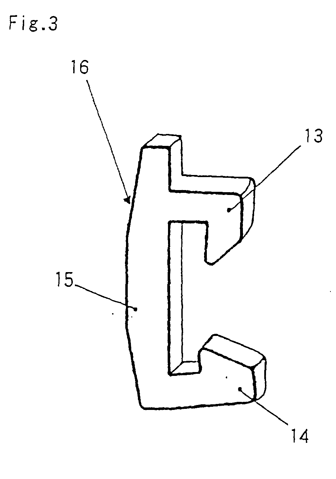

The projection 3 is provided with a groove 7 and the through-hole 5 extending in a direction perpendicular to the groove 7, wherein the groove 7 receives a plug (shown in Fig. 3) in a manner such that the plug is completely embedded in the groove 7 in the outer side end surface of the belt module. The plug retains the connecting rod 21 and is fixed in the through-hole 5.

The number of types of the belt modules are two, one of which is a first belt module with a basic width, and the other a second belt module with half the basic width of the first belt module, the number of the projections of the second belt module being half the number of the projections of the first belt module, wherein a plurality of the first and the second belt modules are connected widthwise with each other to form a conveyor belt with a desired width equal to an integer multiple of a width of the second belt module.

On the other hand, in the bottom of the belt module, a concave portion 10 is provided in the rib portion 2 surrounded by the side wall portions 4 of the projections 3. Each of the projections 3 has its portion, which corresponds to the concave portion 10 of the rib portion 2, formed into a cylinder portion 11 through which the connecting rod 21 passes, whereby a driving sprocket for driving the conveyor belt enters the concave portion 10 of the rib portion 2 to abut against the cylinder portion 11 of the projection 3, which enables the conveyor belt to endure great drive stress and enables the same driving sprocket to rotate in the forward and the reverse direction.

Further, as shown in Fig. 1D which is a side view of the belt module shown in Fig. 1A, the bottom surface of the belt module is formed into a curved, i.e., circular-arc surface. This circular-arc surface, the center of which is denoted by the reference numeral 12 in Fig. 1D, extends from the rib portion 2 to each of the opposite projections 3 thereof. When the belt modules are assembled into the conveyor belt, the bottom surfaces of the belt modules of the conveyor belt are brought into area contact with a rod-like corner guide a radius of which is a predetermined value, which eliminates uneven wear to improve the bottom surfaces of the belt modules in wear resistance.

When the conveyor belt travels in a plane, a pair of flat surface portions 18 (shown in Fig. 1D) of each of the belt modules slide on a conveyor table.

As shown in Fig. 2A, a plurality of the chain belt modules described above are connected widthwise with each other to form the conveyor belt, a plan view of which is shown in Fig. 2A. More particularly, as described in the above, since the number of types of the belt modules are two, one of which is the first belt module with the basic width and the other the second belt module with half the basic width of the first belt module, the number of the projections of the second belt module is half the number of the projections of the first belt module. Consequently, a plurality of the first and the second belt modules are connected widthwise with each other to form a conveyor belt with a desired width equal to an integer multiple of a width of the second belt module.

In the embodiment of the conveyor belt of the present invention shown in Fig. 2A, these two types of the belt modules are staggered in arrangement along its traveling path to improve the conveyor belt in resistance to widthwise applied stress.

The connecting rod 21 for connecting the belt modules is generally constructed of a plastic rod, a length of which depends upon the width of the conveyor belt.

The details of the plug described above are shown in Fig. 3. The plug is provided with a pair of hooks 13, 14 and a connecting portion 15 therebetween. In order to facilitate the assembling operations of the conveyor belt, the connecting portion 15 of the plug has one of its opposite ends extend beyond the hook 13 to form an extension 16. In the assembling operations of the conveyor belt, the hook 13 with the extension 16 of the plug is pushed into the through-hole 5 shown in Fig. 1D. On the other hand, the other hook 14 of the plug is fitted into a lateral groove 9 which is provided in an end portion of the rib portion 2 of the belt module. Consequently, since the plug is hooked at its opposite hooks 13, 14 without fail, there is no fear that the plug drops out of the belt module.

Further, since the connecting portion 15 of the plug has its back curved inwardly as shown in Fig.3, there is no fear that the plug hits against other objects such as external projections and the like to drop out of the belt module. In addition, since it is possible for a workman to mount the plug on the side surface of the conveyor belt, the plug is excellent in workability in the assembling operations of the conveyor belt.

As described above, in the present invention, only two types of the belt modules, one of which types is used as the outmost belt module in the conveyor belt, are assembled into the conveyor belt the width of which may vary, depending upon the number of the belt modules used in the conveyor belt.

Even when the conveyor belt of the present invention is large in width, the conveyor belt of the present invention sufficiently withstands the drive stress imposed on its portion abutting against the driving sprocket. In addition, the conveyor belt of the present invention permits the same driving sprocket to rotate in the forward and the reverse direction.

Further, the conveyor belt of the present invention has its side and bottom surfaces improved in wear resistance without increasing the thickness of plastic used therein, but by having its belt modules improved in shape according to a new technical concept. Consequently, the conveyor belt of the present invention is considerably light in weight and excellent in durability.

Further, in the conveyor belt of the present invention, there is no need to prepare various types of the belt modules, which makes it possible to decrease tooling cost and stock control cost. In addition, since the number of types of the belt modules used in the conveyor belt of the present invention is only two, this facilitates the assembling operations of the conveyor belt, and permits a considerable reduction in the manufacturing cost.

## Claims

1. A conveyor belt module comprising a central rib (2) extending transversely from one end to an opposite end, an equal and even number of projections (3) extending perpendicularly from the rib (2) on a front side and an opposite rear side, said projections (3) each having an equal width and being staggered along the rib (2) and all projections (3) and interval spaces therebetween having substantially one equal width,
the central rib (2) extending from a conveying surface (1, 1a) down to a bottom surface of the conveyor belt module,
each projection (3) being defined by a pair of vertical side walls (4) extending perpendicularly to and integrally from the rib (2) along the full height of the rib (2) in parallel to each other and being joined at a closed end portion, said closed end portion being formed at the ends of the respective pair of side walls (4) each of said projections (3) having a transverse through-hole (5) for receiving a connecting rod (21) therethrough for connecting conveyor belt modules arranged in adjacent rows and columns; **characterized in that**:
a concave portion (10) is provided in the lower surface portion of the rib (2) and arranged for accepting a tooth of a sprocket therein, and **in that** the corresponding closed end portions (11) are cylindrical in shape so as to form a through hole for said connecting rod (21) between the pair of side walls (4) and for being brought into contact with the tooth of the sprocket when entered between the side walls (4) of the projection (3) and into the concave portion (10).

2. A conveyor belt module as claimed in claim 1, being **characterized by**:
the bottom of the conveyor belt module having a circular arc surface (12) extending from the rib (2) toward the front and rear side of the conveyor belt module, the opposite ends of the circular are surface (12) terminating in a flat surface (18) at the bottom of the projections (3) such that the circular arc surface (12) is in surface contact with a curved corner guide bar.

3. A conveyor belt module as claimed in claim 1 or claim 2, wherein the outermost projections each have a groove (7) extending perpendicularly to the through-hole (5), wherein:
the rib (2) includes a lateral groove (9) for receiving a plug (13, 14, 15) which comprises a connecting portion (15) and first and second extensions such that the plug has a substantially U-shape profile with each of the extensions including a hook formation (13, 14); and
when the plug is assembled in the conveyor belt module, the connecting portion (15) is embedded in the groove (7), the hook (14) of the first extension is held in the lateral groove (9) and the hook (13) of the second extension is held in the through-hole (5) of the outermost projection.

4. A conveyor belt, assembly comprising a plurality of conveyor belt modules as claimed in claim 1, 2 or 3, **characterized by**:
a plurality of first conveyor belt modules having a width dimension twice that of a plurality of second conveyor belt modules and likewise having twice as many projections (3) as said second conveyor belt modules, said plurality of first and second conveyor belt modules being arranged in a brick-laid pattern by the connecting rod (21) in the through-holes (5) of the projections (3) of conveyor belt modules placed in an adjacent row and column such that the projections (3) project between the projections (3) of another conveyor belt module in the adjacent row.

## Patentansprüche

1. Förderbandmodul mit einer zentralen Rippe (2), die sich quer von einem Ende zu einem gegenüberliegenden Ende erstreckt, einer gleichen und geraden Anzahl von Vorsprüngen (3), die sich senkrecht von der Rippe (2) auf einer Vorderseite und einer entgegengesetzten Rückseite erstrecken, wobei die genannten Vorsprünge (3) jeweils eine gleiche Breite aufweisen und entlang der Rippe (2) versetzt angeordnet sind und alle Vorsprünge (3) und Abstandsräume dazwischen im wesentlichen eine gleiche Breite haben,
wobei sich die mittlere Rippe (2) von einer Förderoberfläche (1, 1a) nach unten zu einer Bodenfläche des Förderbandmoduls erstreckt,
wobei jeder Vorsprung (3) durch ein Paar vertikaler Seitenwände (4) begrenzt wird, die sich senkrecht zu und integriert von der Rippe (2) entlang der vollständig Höhe der Rippe (2) parallel zueinander entstrecken und an einem geschlossenen Endteil verbunden sind, wobei der geschlossene Endteil an den Enden des jeweiligen Paars von Seitenwänden (4) gebildet ist und jeder der genannten Vorsprünge (3) ein querlaufendes Durchgangsloch (5) zum Aufnehmen eines Verbindungsstabs (21) durch dasselbe zum Verbinden von Förderbandmodulen aufweist, die in aneinandergrenzenden Reihen und Spalten angeordnet sind; **dadurch gekennzeichnet, dass**
ein konkaver Teil (10) in dem unteren Oberflächenteil der Rippe (2) vorgesehen und eingerichtet ist, um einen Zahn eines Zahnrads darin anzunehmen, und dass die entsprechenden geschlossenen Endteile (11) eine zylindrische Form aufweisen, um so ein Durchgangsloch für den genannten Verbindungsstab (21) zwischen dem Paar von Seitenwänden (4) zu bilden, und um mit dem Zahn des Zahnrads in Kontakt gebracht zu werden, wenn dieses zwischen den Seitenwänden (4) des Vorsprungs (3) und in den konkaven Teil (10) eintritt.

2. Förderbandmodul nach Anspruch 1, welches **dadurch gekennzeichnet ist, dass**
der Boden des Förderbandmoduls eine kreisförmige Bogenfläche (12) aufweist, die sich von der Rippe (2) in Richtung auf die Vorder- und Rückseite des Förderbandmoduls erstrecken, wobei die gegenüberliegenden Enden der kreisförmigen Bogenfläche (12) in einer flächen Oberfläche (18) am unteren Teil der Vorsprünge (3) enden, so dass die kreisförmige Bogenfläche (12) in Oberflächenkontakt mit einer gekrümmten Eckenführungsstange steht.

3. Förderbandmodul nach Anspruch 1 oder Anspruch 2, bei dem die äußersten Vorsprünge jeweils eine Nut (7) aufweisen, die sich senkrecht zu dem Durchgangsloch (5) erstreckt, wobei:
die Rippe (2) eine Seitennut (9) zum Aufnehmen eines Steckers (13, 14, 15) umfasst, der einen Verbindungsteil (15) und einen ersten und zweiten Ansatz aufweist, so dass der Stecker ein im wesentlichen U-förmiges Profil aufweist, wobei jeder der Ansätze eine Hakenausbildung (13, 14) umfasst; und
wenn der Stecker in dem Förderbandmodul eingebaut ist, der Verbindungsteil (15) in der Nut (7) eingebettet ist, der Haken (14) des ersten Ansatzes in der Seitennut (9) gehalten wird und der Haken (13) des zweiten Ansatzes in dem Durchgangsloch (5) des äußersten Vorsprungs gehalten wird.

4. Förderband mit einer Mehrzahl von Förderbandmodulen nach Anspruch 1, 2 oder 3, **gekennzeichnet durch**:
eine Mehrzahl erster Förderbandmodule mit einer doppelten Breitenabmessung wie der einer Mehrzahl zweiter Förderbandmodule und entsprechend mit doppelt so vielen Vorsprüngen (3) wie die genannten zweiten Förderbandmodule, wobei die genannte Mehrzahl von ersten und zweiten Förderbandmodulen in einem Ziegelsetzungsmuster **durch** die Verbindungsstange (21) in den Durchgangslöchern (5) der Vorsprünge (3) der Förderbandmodule in einer angrenzenden Reihe und Spalte angeordnet sind, so dass die Vorsprünge (3) zwischen den Vorsprüngen (3) eines anderen Förderbandmoduls in der angrenzenden Reihe vorstehen.

## Revendications

1. Module de courroie de convoyeur comprenant une nervure centrale (2) s'étendant dans le plan transversal à partir d'une extrémité vers une extrémité opposée, un nombre égal et pair de saillies (3) qui s'étendent dans le plan perpendiculaire à partir de la nervure (2) sur un côté avant et un côté opposé arrière, lesdites saillies (3) ayant chacune une largeur égale et étant disposées en quinconce le long de la nervure (2), alors que toutes les saillies (3) et les espaces intermédiaires entre elles ont sensiblement une largeur égale,
la nervure centrale (2) s'étendant à partir d'une surface d'acheminement (1, 1a) vers le bas jusqu'à une surface inférieure du module de courroie de convoyeur,
chaque saillie (3) étant définie par une paire de parois latérales verticales (4) s'étendant dans le plan perpendiculaire vers la nervure (2) et de façon intégrale à partir de celle-ci, le long de la hauteur totale de la nervure (2) en parallèle l'une avec l'autre, et étant réunies au niveau d'une section d'extrémité fermée, ladite section d'extrémité fermée étant formée sur les extrémités de la paire respective de parois latérales (4), chacune desdites saillies (3) possédant un trou traversant transversal (5) destiné à revoir une tige de raccordement (21) à travers celui-ci afin de raccorder les modules de courroie de convoyeur agencés dans des colonnes et des rangées adjacentes ; **caractérisé en ce que** :
une partie concave (10) est prévue dans la partie surface inférieure de la nervure (2) et agencée de façon à y accepter une dent d'un pignon, et **en ce que** les sections d'extrémité fermées correspondantes (11) ont une forme cylindrique de sorte à constituer un trou traversant pour ladite tige de raccordement (21) entre la paire de parois latérales (4), et pour être mises en contact avec la dent du pignon au moment de son entrée entre les parois latérales (4) de la saillie (3) et dans la partie concave (10).

2. Module de courroie de convoyeur, selon la revendication 1, étant **caractérisé par**:
le bas du module de courroie de convoyeur ayant une surface en arc circulaire (12) qui s'étend à partir de la nervure (2) vers le côté avant et arrière du module de courroie de convoyeur, les extrémités opposées de la surface en arc circulaire (12) se terminant dans une surface plane (18) sur le bas des saillies (3), de sorte que la surface en arc circulaire (12) soit en contact superficiel avec une barre de guidage d'angle recourbée.

3. Modulé de courroie de convoyeur, selon la revendication 1 ou la revendication 2, dans lequel les saillies situées le plus à l'extérieur possèdent chacune une rainure (7) qui s'étend dans le plan perpendiculaire vers le trou traversant (5), dans lequel :
la nervure (2) comprend une rainure latérale (9) destinée à recevoir un obturateur (13, 14, 15) qui est composé d'une partie de raccordement (15) et dune première et d'une deuxième extensions de sorte que l'obturateur ait un profil sensiblement en U, alors que chacune des extensions comporte une formation en crochet (13, 14) ; et
lorsque l'obturateur est monté dans le module de courroie de convoyeur, la partie de raccordement (15) vient s'intégrer dans la rainure (7), le crochet (14) de la première extension est maintenu dans la rainure latérale (9) et le crochet (13) de la deuxième extension est maintenu dans le trou traversant (5) de la saillie située le plus à l'extérieur.

4. Ensemble de courroie de convoyeur comprenant une pluralité de modules de courroie de convoyeur, selon la revendication 1, 2 ou 3, **caractérisé par** :
une pluralité de premiers modules de courroie de convoyeur avec une largeur dont la dimension est égale au double de celle d'une pluralité de deuxièmes modules de courroie de convoyeur, et de même, possédant deux fois plus de saillies (3) que lesdits deuxièmes modules de courroie de convoyeur, ladite pluralité de premiers et deuxièmes modules de courroie de convoyeur étant agencée selon un agencement de briquetage par la tige de raccordement (21) dans les trous traversants (5) des saillies (3) des modules de courroie de convoyeur placés dans une colonne et une rangée adjacentes, de sorte que les saillies (3) se projettent entre les saillies (3) d'un autre module de courroie de convoyeur dans une rangée adjacente.
